# FASCICULE DE BREVET EUROPEEN

(11) **EP 1 610 538 B1**
(45) Date de publication et mention de la délivrance du brevet: **17.10.2012**
(21) Numéro de dépôt: 05291282.1
(22) Date de dépôt: 15.06.2005
(51) Int. Cl.: H04M 11/06, H04M 3/38, H04L 29/06

(54) **Procédé et dispositif de localisation physique d'un abonné raccordé à un réseau fixe de télécommunication**
Verfahren und Vorrichtung zur Standorterfassung eines Festnetzteilnehmers
Process and device for localization of a subscriber connected to a fixed-line telecommunications network

(30) Priorité: 23.06.2004 FR 0406832
(43) Date de publication de la demande: 28.12.2005
(73) Titulaire: Oneaccess, 92140 CLAMART (FR)
(72) Inventeur: Behaghel, Denis, 78590 Noisy le Roi (FR); Lecomte, Antoine, 92260 Fontenay aux Roses (FR)
(74) Mandataire: Zimmermann, Alain

(56) Documents cités:
- WO-A-99/56434
- US-A1- 2002 162 029

## Description

La présente invention concerne un procédé de localisation physique d'un abonné raccordé à un réseau téléphonique commuté par l'intermédiaire d'un commutateur téléphonique et à un réseau d'accès haut débit permettant la connexion d'un équipement pourvu d'un identifiant. Elle a trait également à un dispositif pour la mise en oeuvre de ce procédé.

L'émergence des nouvelles technologies xDSL (Digital Subscriber Line) permet d'offrir à l'utilisateur une bande passante élevée pour un coût relativement faible. Cette technologie, destinée prioritairement aux utilisateurs résidentiels ; est également adaptée aux utilisateurs professionnels pour un accès aux réseau Internet.

L'utilisateur d'une infrastructure publique offre l'avantage d'être accessible à coût réduit par rapport à une infrastructure privée. Or, les utilisateurs professionnels requièrent également que certaines données restent protégées car ces informations continues dans les paquets transitant dans le réseau Internet doivent rester inaccessibles au public.

Il existe diverses techniques, **comme celle décrite par exemple dans** US 2002/0162029, permettant de garantir qu'un équipement utilisateur raccordé à un réseau fixé est bien abonnée aux services d'un opérateur, indépendamment de sa localisation physique (Exemple décodeur vidéo sur réseau câblé). Ces mécanismes permettent de garantir l'authenticité de l'équipement utilisateur, mais il n'y a pas de garantie sur la localisation physique de cet équipement.

La faille de sécurité de ces systèmes est la suivante : les réseaux d'accès haut débit (câble ou xDSL) peuvent être construits de telle manière que les paramètres autorisant l'accès au réseau sont découplés de la ligne physique. Il s'agit en réalité d'un jeu de paramètre qui est échangé avec un système d'authentification lors de la phase de connexion. L'authentification (et tous les mécanismes de sécurité qui en découlent) se fait à partir de donnée configurées et stockées dans l'équipement. Si l'équipement est volé et reconnecté sur une autre ligne (câble ou xDSL) connecté au même opérateur d'infrastructure de télécommunications, le voleur est capable de connecter l'équipement volé au service de l'opérateur sans que cette faille ne soit détectable par les équipements auxquels l'équipement volé se connecte.

La présente invention a donc pour but principal de remédier à cet inconvénient et pour ce faire, elle a pour objet un procédé de localisation du type susmentionné qui se caractérise essentiellement en ce qu'il comprend les étapes suivantes:
- émission, par l'équipement, sur le réseau téléphonique commuté, d'un appel téléphonique d'identification vers un serveur d'identification;
- insertion par le commutateur téléphonique du numéro de téléphone de l'abonné;
- vérification, par le serveur d'identification, de la correspondance entre le numéro de téléphone de l'abonné et l'identifiant de l'équipement, par consultation d'une base de données; et,
- autorisation de la connexion haut débit si la vérification est positive.

On a ainsi la garanti que l'équipement n'est pas utilisé sue une autre ligne téléphonique que celle d'origine. Ceci permet de s'assurer a priori que l'équipement n'a pas été volé et qu'il est utilisé dans son enceinte d'origine.

De préférence, le procédé selon l'invention comprend en outre une étape d'authentification de l'appelant par un mot de passe, conditionnant l'utilisation des services haut débit.

Bien entendu, lorsque la connexion haut débit est du type ADSL, la transmission téléphonique est réalisée sur la même paire de cuivre que la transmission ADLS.

Un dispositif par la mise en oeuvre du procédé selon l'invention, du type comprenant un équipement, pourvu d'un accès haut débit et d'un accès au réseau téléphonique commuté, et un serveur d'authenticité de l'usage dudit équipement, est essentiellement caractérisé en ce qu'il comprend en outre :
- des moyens pour ajouter le numéro de téléphone de l'appelant au message d'identification émis pat l'équipement sur le réseau téléphonique commuté ;
- un serveur d'identification pourvu d'une base de données pour vérifier la correspondance entre ledit numéro de téléphone et l'identifiant de l'équipement ; et
- des moyens pour n'autoriser la connexion haut débit de l'équipement que si la vérification est positive.

Une forme d'exécution de l'invention est décrite ci-après à titre d'exemple, en référence au dessin annexé dans lequel :
- la figure 1 est un schéma synoptique très simplifié d'un dispositif de localisation conforme à l'invention ; et
- la figure 2 est un organigramme illustrant le procédé de localisation selon l'invention.

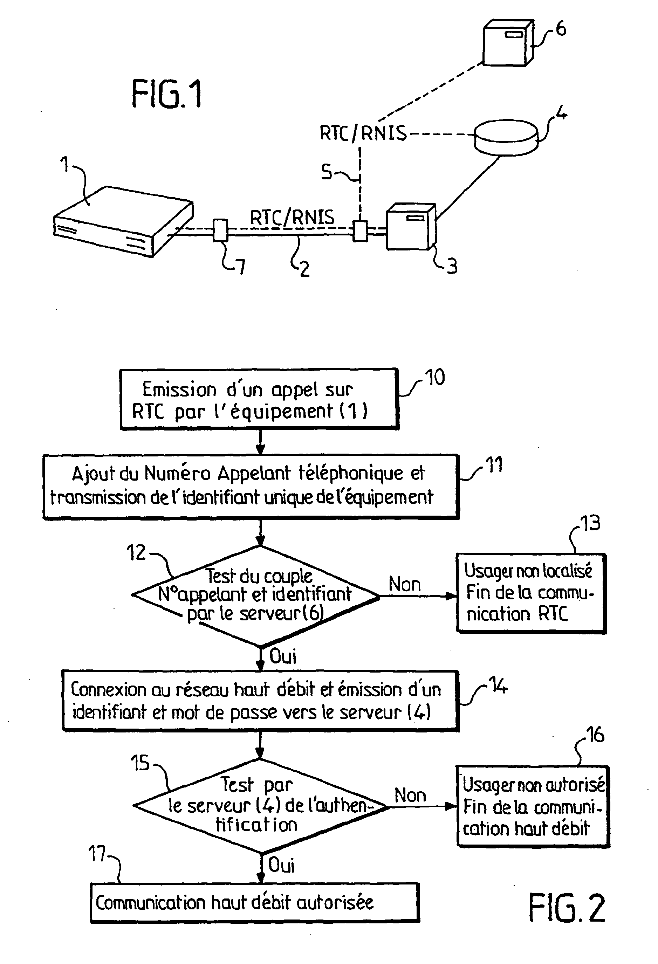

En se référant tout d'abord à la figure 1, on peut voir en 1 un équipement destiné à fonctionner avec des données haut débit. A cet effet, l'équipement 1 dispose d'un accès haut débit, par exemple du type xDSL, et d'un accès au réseau téléphonique commuté. Le réseau d'accès haut débit xDSL comprend, de manière connue en soi, une première paire de cuivre 2 à laquelle sont raccordés, par l'intermédiaire de commutateurs de données, un multiplexeur xDSL 3 et un serveur d'authentification de l'usager 4. Quant au réseau téléphonique commuté, qui peut être soit du type analogique (RTC) soit du type numérique (RNIS), il comprend une seconde paire de cuivre 5, également raccordée au serveur 4 par l'intermédiaire de commutateurs téléphoniques.

Conformément à l'invention, le réseau téléphonique 5 est en outre raccordé à un serveur 6 d'identification de la localisation physique de l'usager.

On notera en outre que dans le cas où la transmission haut débit est de type ADSL, la transmission téléphonique peut être réalisée sur la même paire de cuivre que la transmission ADSL, grâce à un filtre 7 installé chez l'usager. Il va de soi par ailleurs que si l'accès haut débit est décrit ici comme étant du type xDSL, il pourrait tout aussi bien s'agir d'un accès du type câble.

On va maintenant décrire plus en détail le procédé de localisation conforme à l'invention, en se référant à l'organigramme de la figure 2.

Dans un premier temps, l'équipement 1 émet un appel téléphonique d'identification sur le réseau commuté 5 vers le serveur d'identification 6 (étape 10). Le commutateur téléphonique de rattachement de l'abonné y insère alors le numéro de téléphone de cet abonné (étape 11). Il s'agit donc d'un numéro de téléphone qui correspond physiquement à la ligne de l'abonné xDSL.

Dans un deuxième temps, le serveur 6 vérifie le numéro de téléphone de l'appelant. A cet effet, il consulte sa base de données afin de vérifier que ledit numéro de téléphone correspond bien à l'identifiant de l'équipement 1 (étape 12). Si le numéro de téléphone n'est pas reconnu, il est mis fin à la communication téléphonique (étape 13). Dans le cas contraire, l'équipement se trouve connecté au réseau xDSL et émet alors vers le serveur 4 un identifiant accompagné d'un mot de passe (étape 14).

Le serveur 4 authentifie ensuite l'usager grâce à son mot de passe (étape 15). Si l'usager n'est pas reconnu comme étant un usager autorisé, il est mis fin à la communication haut débit (étape 16). Dans le cas contraire, la communication haut débit est autorisée (étape 17).

Le procédé décrit ci-dessus permet donc de contrôler la localisation et l'autorisation d'accès d'un usager aux serveurs haut débit. On est ainsi assuré en particulier que l'équipement 1 n'a pas été volé, puisqu'il est utilisé dans le local de l'abonné.

Ce procédé est activé à chaque mise sous tension de l'équipement d'accès 1 ou à chaque fois que la communication avec le serveur haut débit est interrompue.

## Revendications

1. Procédé de localisation physique d'un abonné raccordé à un réseau téléphonique commuté (5) par l'intermédiaire d'un commutateur téléphonique et à un réseau d'accès haut débit (2) permettant la connexion d'un équipement (1) pourvu d'un identifiant, **caractérisé en ce qu'**il comprend les étapes suivantes:
- émission, par l'équipement (1), sur le réseau téléphonique commuté, d'un appel téléphonique d'identification vers un serveur d'identification (6);
- insertion par le commutateur téléphonique du numéro de téléphone de l'abonné;
- vérification, par le serveur d'identification (6), de la correspondance entre le numéro de téléphone de l'abonné et l'identifiant de l'équipement (1), par consultation d'une base de données; et,
- autorisation de la connexion haut débit si la vérification est positive.

2. Procédé selon la revendication 1, **caractérisé en ce qu'**il comprend en outre une étape d'authentification de l'appelant par un mot de passe, conditionnant l'utilisation des services haut débit.

3. Procédé selon la revendication 1 ou 2, **caractérisé en ce que** lorsque la connexion haut débit est du type ADSL, la transmission téléphonique est réalisée sur la même paire de cuivre que la transmission ADSL.

4. Dispositif pour la mise en oeuvre du procédé selon la revendication 2 ou 3, du type comprenant un équipement (1), pourvu d'un accès haut débit (2) et d'un accès au réseau téléphonique commuté (5), et un serveur (4) d'authentification de l'usager dudit équipement (1), **caractérisé en ce qu'**il comprend en outre :
- des moyens pour ajouter le numéro de téléphone de l'appelant au message d'identification émis par l'équipement (1) sur le réseau téléphonique commuté ;
- un serveur d'identification (6) pourvu d'une base de données pour vérifier la correspondance entre ledit numéro de téléphone et l'identification de l'équipement (1) ; et
- des moyens pour n'autoriser la connexion haut débit de l'équipement (1) que si la vérification est positive.

## Claims

1. Process for physically locating a subscriber connected to a switched telephone network (5) by means of a telephone switch and to a broadband access network (2) allowing for the connection of equipment (1) provided with an identifier, **characterised in that** it comprises the following steps:
- transmission of an identification telephone call over the switched telephone network to an identification server (6) by the equipment (1);
- insertion of the telephone number of the subscriber by the telephone switch;
- verification of the correspondence between the telephone number of the subscriber and the identifier of the equipment (1) by the identification server (6) by consultation of a database, and
- authorisation of the broadband connection if the verification is positive.

2. Process according to claim 1, **characterised in that** it moreover comprises a step for authenticating the caller by a password conditioning the use of the broadband services.

3. Process according to claim 1 or claim 2, **characterised in that**, when the broadband connection is of the ADSL type, telephone transmission is effected over the same copper pair as the ADSL transmission.

4. Device for carrying out the process according to claim 2 or claim 3, of the type comprising equipment (1) provided with broadband access (2) and with access to the switched telephone network (5), and a server (4) for authenticating the user of the said equipment (1), **characterised in that** it moreover comprises:
- means for adding the telephone number of the caller to the identification message transmitted by the equipment (1) over the switched telephone network;
- an identification server (6) provided with a database for verifying the correspondence between the said telephone number and the identifier of the equipment (1), and
- means for authorising the broadband connection of the equipment (1) only if the verification is positive.

## Patentansprüche

1. Verfahren zur Standorterfassung eines Teilnehmers, der über eine Fernsprechvermittlung mit einem Fernsprechfestnetz (5) und mit einem breitbandigen Zugangsnetz (2) verbunden ist, das die Verbindung eines mit einer Kennung versehenen Geräts (1) gestattet, **dadurch gekennzeichnet, dass** es die folgenden Schritte umfasst:
- Senden eines Fernsprechanrufs zur Identifizierung durch das Gerät (1) über das Fernsprechfestnetz an einen Identifizierungsserver (6),
- Einfügen der Fernsprechnummer des Teilnehmers durch die Fernsprechvermittlung,
- Bestätigung der Übereinstimmung zwischen der Fernsprechnummer des Teilnehmers und der Kennung des Geräts (1) durch den Identifizierungsserver (6) durch Abfrage einer Datenbank und
- Autorisierung der Breitbandverbindung, wenn die Überprüfung positiv ist.

2. Verfahren gemäß Anspruch 1, **dadurch gekennzeichnet, dass** es außerdem einen Schritt der Authentifizierung des Anrufers durch ein Passwort umfasst, das Bedingung zur Nutzung der Breitbanddienste ist.

3. Verfahren gemäß Anspruch 1 oder 2, **dadurch gekennzeichnet, dass** die Breitbandverbindung vom ADSL-Typ ist und die Fernsprechverbindung über dieselbe Kupferdoppelader wie die ADSL-Verbindung bewerkstelligt wird.

4. Vorrichtung zur Durchführung des Verfahrens gemäß Anspruch 2 oder 3 des Typs, der ein für einen Breitbandzugang (2) und einen Zugang zum Fernsprechfestnetz (5) ausgelegtes Gerät (1) und einen Server (4) zur Authentifizierung des Benutzers des Geräts (1) umfasst, **dadurch gekennzeichnet, dass** sie außerdem Folgendes umfasst:
- Mittel zum Hinzufügen der Fernsprechnummer des Anrufers zu der vom Gerät (1) an das Fernsprechfestnetz ausgesandten Identifizierungsnachricht,
- einen Identifizierungsserver (6), der mit einer Datenbank zum Bestätigen der Übereinstimmung zwischen der Fernsprechnummer und der Kennung des Geräts (1) versehen ist, und
- Mittel zum Autorisieren der Breitbandverbindung des Geräts (1), nur wenn die Bestätigung positiv ist.
